# EUROPEAN PATENT APPLICATION

(11) **EP 3 245 881 A1**
(43) Date of publication of application: **22.11.2017**
(21) Application number: 16196483.8
(22) Date of filing: 28.10.2016
(51) Int. Cl.: A23L 3/375, A23L 25/00

(54) **METHOD OF COOLING NUTS**

(30) Priority: 20.05.2016 US 201662339256 P
(71) Applicant: Linde Aktiengesellschaft, 80331 München (DE)
(72) Inventor: RIES, Jason, Sun Prairie, WI 53590 (US); LAURA, Brad D., Oxford, MI 48371 (US); GUZMAN, Amanda, Long Beach, CA 90803 (US)
(74) Representative: Hofmann, Andreas

(57) **Abstract**

In order to overcome the limitations and problems that earlier methods have experienced, a method of cooling edible nuts includes exposing and/or subjecting the edible nuts to a cryogenic substance such as for example nitrogen or carbon dioxide. A method of preparing edible nuts for transport is also provided.

## Description

### Technical field of the present invention

The present invention relates to chilling or freezing of food products such as for example of edible nuts.

### Technological background of the present invention

Industry practice for edible nuts, such as for example cashew kernels or tree nuts, after roasting same is to permit the nuts to cool by exposure to ambient air temperatures prior to subsequent processing or packaging for shipment to retail stores.

Immediate packaging of these types of nuts after roasting results in breakage of the nuts and a thin film of oil from the nuts being deposited on and in some cases lining an interior surface of the packaging in which the nuts are shipped and/or sold.

The oily film is a result of the oil used to roast the nuts and provides for an undesirable film at the inside of retail packages which transfers to a consumer upon opening of the package and removing the nuts for consumption.

Known processes allow the nuts to cool to avoid the breakage and oily residue. Once the nuts cool, such are less susceptible to breakage and do not exhibit the oily film.

The cooling process after roasting is important in that it allows the kernels and tree nuts to harden which reduces breakage, and for oil remaining on the surface of the nut to be adsorbed into the kernel or nut. Such adsorption is desirable.

However, the known cooling process with ambient air also takes a considerable amount of time which increases processing time for the nuts.

### Disclosure of the present invention: object, solution, advantages

Starting from the disadvantages and shortcomings as described above as well as taking the prior art as discussed into account, an object of the present invention is to overcome the limitations and problems that earlier methods have experienced.

This object is accomplished by a method comprising the features of claim 1 as well as by a method comprising the features of claim 10. Advantageous embodiments, expedient improvements and other optional features of the present invention are set forth herein and disclosed in the respective dependent claims.

There is therefore provided herein a method embodiment of chilling or freezing of edible nuts, in particular comprising nuts selected from the group consisting of cashew kernels or tree nuts, by at least one of cryogenic, mechanical, and cryo-mechanical refrigeration.

Such refrigeration can be done in continuous or batch processes, and reduces breakage of the nuts prior to packaging which results in a higher yield of consistent product in a more desirable condition for retail sales.

The present method embodiments during the chilling or freezing significantly reduce surface oil on the kernels and nuts which thereby permits the manufacturer to immediately package the products and not have to wait for the oil to be adsorbed into the products, so that same can be shipped relatively quickly to distribution sites and/or retail stores.

A method is therefore provided herein for cooling edible nuts, the method including exposing and/or subjecting, in particular continuously exposing and/or continuously subjecting, the edible nuts to a cryogenic substance, such as for example nitrogen or carbon dioxide, or comprising nitrogen gas. The cryogenic substance may advantageously be at a temperature of -28.89°C (-20°F) to -23.33°C (-10°F).

Before the exposing and/or subjecting, the edible nuts may expediently be salted.

The exposing and/or subjecting may favourably occur in a spiral chiller.

After the exposing and/or subjecting, the cooled edible nuts may preferably be packaged.

A method is also provided herein for preparing edible nuts for transport, the method including:
- roasting the edible nuts in oil;
- removing at least a portion of the oil from the edible nuts, in particular by straining the edible nuts;
- exposing and/or subjecting the edible nuts to a cryogenic substance for cooling said edible nuts, in particular in ambient air after the straining; and
- packaging the cooled edible nuts to be transported.

The method herein may advantageously include the cryogenic substance being selected from nitrogen and carbon dioxide. The cryogenic substance may expediently be at a temperature of from -37.22°C (-35°F) to -23.33°C (-10°F), and more particularly at a temperature of from -37.22°C (-35°F) to -31.67°C (-25°F).

The cooling may favourably comprise reducing a temperature of the edible nuts to 43.33°C (110°F) to 48.88°C (120°F).

The exposing and/or subjecting and the cooling may preferably occur in a spiral chiller.

### Detailed description of the present invention;

### best way of embodying the present invention

Before explaining the inventive embodiments in detail, it is to be understood that the present invention is not limited in its application to the details of construction and arrangement of parts illustrated in the accompanying drawings, if any, since the present invention is capable of other embodiments and being practiced or carried out in various ways. Also, it is to be understood that the phraseology or terminology employed herein is for the purpose of description and not of limitation.

In the following description, terms such as a horizontal, upright, vertical, above, below, beneath and the like, are to be used solely for the purpose of clarity illustrating the present invention and should not be taken as words of limitation.

The present method embodiments can be understood more clearly by way of the following example:
Raw cashew kernels in an amount of 0.45 kg (1 pound) to 0.68 kg (1.5 pounds) were roasted in oil in a small fryer such that the kernel temperature was maintained from 147.22°C (297°F) to 151.67°C (305°F).

After roasting, the kernels were strained and allowed to cool in ambient air to a temperature of 43.33°C (110°F) to 48.88°C (120°F) to simulate a temperature used by a processer during packaging of the nuts.

The cooled kernels were loaded onto a conveyor belt of a tunnel chiller at approximately 7.32 kg/m² (1.5 pounds per square foot) to 8.79 kg/m² (1.8 pounds per square foot) of the belt. A direct spray of the cryogen was used in the chiller, but was not applied directly onto the kernels.

The conveyor belt ran laterally and smoothly (i. e. was not agitated) and fans within the tunnel were operated to circulate the nitrogen gas. The kernels were collected at an outlet from the tunnel chiller, packed into containers and shipped at ambient temperature to another facility for testing.

A spiral chiller could alternatively be used to administer the cryogen, such as nitrogen, to the kernels. Alternatively, a closed loop refrigeration system, such as for example an ammonia system or a system using a similar refrigerant, can be used instead of one with a cryogenic fluid.

It will be understood that the embodiments described herein are merely exemplary, and that a person skilled in the art may make variations and modifications without departing from the spirit and scope of the present invention. All such variations and modifications are intended to be included within the scope of the present invention as described herein. It should be understood that the embodiments described above are not only in the alternative, but can be combined.

## Claims

1. A method of cooling edible nuts, comprising exposing and/or subjecting the edible nuts to a cryogenic substance.

2. The method according to claim 1, wherein the cryogenic substance is a cryogen selected from nitrogen, and carbon dioxide.

3. The method according to claim 1 or 2, wherein the cryogenic substance comprises nitrogen gas.

4. The method according to at least one of claims 1 to 3, wherein the edible nuts comprise nuts selected from the group consisting of cashew kernels and tree nuts.

5. The method according to at least one of claims 1 to 4, wherein the exposing and/or subjecting is continuous.

6. The method according to at least one of claims 1 to 5, further comprising packaging the cooled edible nuts.

7. The method according to at least one of claims 1 to 6, wherein the cryogenic substance is at a temperature of -28.89°C (-20°F) to -23.33°C (-10°F).

8. The method according to at least one of claims 1 to 7, further comprising salting the edible nuts before the exposing and/or subjecting.

9. The method according to at least one of claims 1 to 8, wherein the exposing and/or subjecting occurs in a spiral chiller.

10. A method of preparing edible nuts for transport, comprising:
- roasting the edible nuts in oil;
- removing at least a portion of the oil from the edible nuts;
- exposing and/or subjecting the edible nuts to a cryogenic substance for cooling said edible nuts, in particular according to at least one of claims 1 to 9; and
- packaging the cooled edible nuts to be transported.

11. The method according to claim 10, further comprising cooling the edible nuts in ambient air after the straining.

12. The method according to claim 10 or 11, wherein the cooling comprises reducing a temperature of the edible nuts to 43.33°C (110°F) to 48.88°C (120°F).

13. The method according to at least one of claims 10 to 12, wherein the cooling with the cryogenic substance is at a temperature of -37.22°C (-35°F) to -31.67°C (-25°F).

14. The method according to at least one of claims 10 to 13, wherein the exposing and/or subjecting and the cooling occur in a spiral chiller.

15. The method according to at least one of claims 10 to 14, wherein the removing comprises straining the edible nuts for removing the at least a portion of the oil.
